# FASCICULE DE BREVET EUROPEEN

(11) **EP 0 870 949 B1**
(45) Date de publication et mention de la délivrance du brevet: **19.12.2007**
(21) Numéro de dépôt: 97201000.3
(22) Date de dépôt: 07.04.1997
(51) Int. Cl.: F16H 7/08, A01D 34/56

(54) **Dispositif de commande d'embrayage pour engin motorisé destiné au travail de la terre ou de la coupe de l'herbe du type pour conducteur marchant, notamment un motoculteur**
Betätigungseinrichtung für eine Kupplung eines selbstfahrenden handgeführten Bodenbearbeitungs- oder Grasmähgerätes, insbesondere Grubber
Clutch control for a powered unit guided by hand for earth working or grass mowing, particularly a cultivator

(43) Date de publication de la demande: 14.10.1998
(73) Titulaire: PUBERT S.A., 85111 Chantonnay Cedex (FR)
(72) Inventeur: Pubert, Jean-Pierre, 85110 Chantonnay (FR)
(74) Mandataire: Arbousse-Bastide, Jean-Claude Ph.

(56) Documents cités:
- EP-A- 0 092 077
- US-A- 3 841 449
- US-A- 4 564 358
- US-A- 4 991 382

## Description

La présente invention a pour objet un dispositif de commande d'embrayage pour engin motorisé destiné au travail de la terre ou de la coupe de l'herbe, du type pour conducteur marchant, notamment un motoculteur.

Les engins du type motoculteur ou analogues comportent pour la plupart un outil mû par un moteur thermique.

La transmission est généralement réalisée par l'intermédiaire d'une courroie montée lâche sur deux poulies, l'une en liaison avec l'arbre moteur et l'autre en liaison avec l'outil, et d'un moyen de tension de ladite courroie, du type galet ou came, dont la translation est commandée par un câble sous gaine actionné par un levier articulé sur une poignée de la barre de guidage de l'engin.

Le serrage du levier contre la poignée permet, par la tension de la courroie, d'embrayer l'outil, son relâchement entraînant le débrayage, ce qui constitue une sécurité du type homme-mort. Un tel dispositif est connu du document US-A-4 564 358.

Ce dispositif d'embrayage présente de nombreux inconvénients, d'une part le serrage du levier nécessite un effort important qu'il faut maintenir durant le travail, effort qui peut toutefois être limité par démultiplication en augmentant la course du levier, mais ce qui génère un autre inconvénient pour les personnes dont les mains sont petites, les femmes par exemple, et d'autre part, le câble de transmission doit, pour permettre son bon coulissement dans la gaine, décrire de larges courbes, en sorte qu'il peut constituer une gêne pour effectuer des manoeuvres, notamment en s'accrochant à des obstacles.

De plus, l'effort à fournir pour maintenir le levier serré contre la poignée ne peut pas être durable, notamment lorsque le terrain est chaotique, en sorte que la tension de la courroie n'est pas constante, ce qui entraîne le patinage de celle-ci et donc une usure rapide.

De plus encore, la commande par câble étant directe et l'effort à fournir étant difficilement dosable du fait de son importance, l'embrayage s'effectue instantanément, en sorte que la mise en marche est brutale.

La présente invention a pour but de remédier à ces divers inconvénients en proposant un dispositif de commande d'embrayage nécessitant un effort peu important qui peut être maintenu longtemps, et permettant une tension constante de la courroie ce qui allonge la durée de vie de celle-ci.

Le dispositif objet de la présente invention se caractérise essentiellement en ce que le moyen de mise en tension de la courroie est mû en translation par un actionneur pneumatique alimenté par la dépression du moteur thermique, et commandé par l'intermédiaire d'une vanne.

Selon une caractéristique additionnelle du dispositif selon l'invention, la vanne est manoeuvrable par un levier disposé sur une poignée, et est intercalée entre deux tuyaux, dont l'un est connecté à la tubulure d'admission du moteur thermique, et l'autre à l'actionneur pneumatique.

Selon une autre caractéristique additionnelle du dispositif selon l'invention, l'actionneur pneumatique commande le déplacement du moyen de tension par l'intermédiaire d'un système de renvoi d'angle.

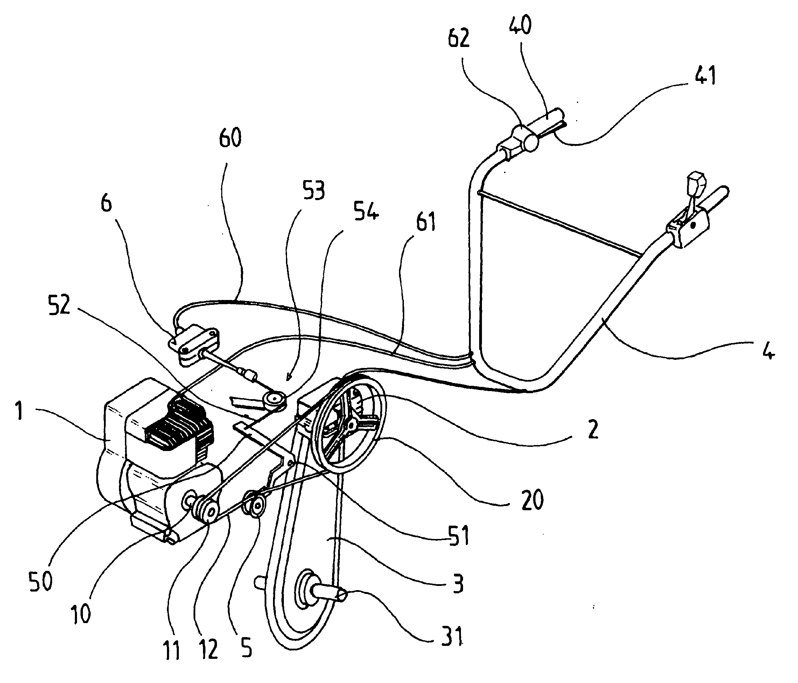

Les avantages et les caractéristiques de la présente invention ressortiront plus clairement de la description qui suit et qui se rapporte au dessin annexé, lequel en représente un mode de réalisation non limitatif.

Dans le dessin annexé, la figure unique représente une vue en perspective partielle d'un engin motorisé équipé d'un dispositif de commande d'embrayage selon l'invention.

Sur cette figure, on peut voir certains des éléments qui constituent de manière connue une motobineuse, à savoir un moteur thermique 1, un inverseur 2, un réducteur 3 et une barre de guidage 4.

L'arbre menant 10 du moteur 1 porte une poulie 11 reliée, par l'intermédiaire d'une courroie 12, à la poulie 20 de l'inverseur 2 qui commande, par l'intermédiaire du réducteur 3, un arbre 31 portant un outil, non représenté.

La courroie 12 est montée lâche entre les poulies 11 et 20, aussi l'entraînement de la poulie 20 ne peut être réalisé que par la tension de la courroie 12 au moyen d'un galet 5 qui prend appui sur celle-ci.

Selon l'invention, le galet 5 est monté à une extrémité d'un levier 50 articulé en pivotement autour d'un axe 51, et relié par son autre extrémité à l'extrémité d'un câble 52 relié, par l'intermédiaire d'un renvoi d'angle 53 se présentant sous la forme d'un galet 54, à un actionneur pneumatique 6.

L'actionneur pneumatique 6, de type connu, est connecté à un tuyau 60 qui passe dans la barre de guidage 4, tandis qu'un tuyau 61, qui est connecté à la tubulure d'admission du moteur 1, passe également dans la barre de guidage 4. Les tuyaux 60 et 61 se rejoignent à une poignée 40 de la barre de guidage 4, où ils sont connectés à une vanne 62 actionnée par un levier 41, de manière que le rapprochement du levier 41 de la poignée 40 commande l'ouverture de la vanne 62 ce qui permet la mise en relation des tuyaux 60 et 61.

Lors de l'ouverture de la vanne 62, la force d'aspiration générée par la dépression à l'admission, permet par l'intermédiaire de l'actionneur pneumatique 6, une traction sur le câble 52 et donc la translation du galet 50 et la tension de la courroie 12.

L'ouverture de la vanne 62 ne demande que peu d'effort sur le levier 41, aussi le travail peut être effectué aisément et sans fatigue, évitant ainsi d'éventuels relâchements susceptibles de détendre la courroie 12 et d'entraîner l'usure prématurée de cette dernière.

La tension de la courroie 12 par dépression est réalisée progressivement ce qui permet un démarrage sans à-coup, de plus, le relâchement du levier 41 entraîne la fermeture de la vanne 62, en sorte que le dispositif d'homme-mort est reproduit.

Enfin, il n'est pas nécessaire que les tuyaux 60 et 61 décrivent de grandes courbes, il suffit qu'ils ne puissent pas être pliés, ils peuvent ainsi être logés dans la barre de guidage 4.

## Revendications

1. Dispositif de commande d'embrayage pour engin motorisé destiné au travail de la terre ou de la coupe de l'herbe, du type pour conducteur marchant, notamment un motoculteur, dont la transmission est réalisée par l'intermédiaire d'une courroie (12) montée lâche sur deux poulies (11, 20), l'une en liaison avec l'arbre menant (10) d'un moteur thermique (1) et l'autre en liaison avec l'outil, alors que l'embrayage est réalisé par application contre ladite courroie (12) d'un moyen de mise en tension (5), **caractérisé en ce que** ledit moyen de mise en tension (5) de la courroie (12) est mû en translation par un actionneur pneumatique (6) alimenté par la dépression du moteur thermique (1), et commandé par l'intermédiaire d'une vanne (62).

2. Dispositif selon la revendication 1 **caractérisé en ce que** la vanne (62) est manoeuvrable par un levier (41) disposé à une poignée (40) de la barre de guidage (4), et est intercalée entre deux tuyaux (60, 61) dont l'un est connecté à la tubulure d'admission du moteur thermique (1), et l'autre à l'actionneur pneumatique (6).

3. Dispositif selon la revendication 1 ou la revendication 2 **caractérisé en ce que** l'actionneur pneumatique (6) commande le déplacement du moyen de tension (5) par l'intermédiaire d'un système de renvoi d'angle (53).

## Claims

1. Clutch control mechanism for motorised appliance to be used to work ground or cut grass, of walking operator type, in particular a motorised cultivator, whose transmission uses a belt (12) fitted loosely on two pulleys (11, 20) one linked to the drive shaft (10) of a heat engine (1) and the other linked to the tool, while the clutch is activated by application against the said belt (12) using a power-up device (5) **characterised by** this power-up device (5) of the belt (12) being driven in a movement of translation by a pneumatic actuator (6) powered by the depression of the heat engine (1) and controlled by means of a valve (62).

2. Clutch control mechanism as in claim 1 wherein the valve (62) being manoeuvrable using a lever (41) fitted on a handle (40) on the guide bar (4) and inserted between two tubes (60, 61) one of which is connected to the induction pipe of the heat engine (1), and the other to the pneumatic actuator (6).

3. Clutch control mechanism as in claim 1 or claim 2 wherein the pneumatic actuator (6) controls the movement of the power-up device (5) by means of a bevel gear system (53).

## Patentansprüche

1. Vorrichtung zur Steuerung einer Schaltkupplung für ein motorisiertes Fahrzeug, bestimmt zur Bodenbearbeitung oder zum Mähen von Gras, handgeführt, insbesondere für einen Einachsschlepper, dessen Transmission über einen Riemen (12) erfolgt, der locker auf zwei Scheiben (11, 20) montiert ist, wovon eine in Verbindung mit der Antriebswelle (10) eines Wärmemotors (1) und die andere in Verbindung mit dem Werkzeug steht, wobei der Kuppelvorgang durch Anlegen eines Spannmittels (5) an diesen Riemen (12) erfolgt, **dadurch gekennzeichnet, dass** dieses Mittel (5) zur Spannung des Riemens (12) durch ein pneumatisches Stellglied (6) in Bewegung versetzt wird, das durch den Unterdruck des Wärmemotors (1) gespeist und über ein Ventil (62) gesteuert wird.

2. Vorrichtung gemäß Anspruch 1, **dadurch gekennzeichnet, dass** das Ventil (62) über einen Hebel (41) bedient werden kann, der an einem Griff (40) der Führungsstange (4) angebracht und zwischen zwei Rohren (60, 61) eingeschoben ist, wobei ein Rohr mit dem Einlasskrümmer des Wärmemotors (1) und das andere mit dem pneumatischen Stellglied (6) verbunden ist.

3. Vorrichtung gemäß Anspruch 1 oder Anspruch 2, **dadurch gekennzeichnet, dass** das pneumatische Stellglied (6) die Ortsveränderung des Spannmittels (5) mit Hilfe eines Winkeltriebsystems (53) steuert.
